# EUROPEAN PATENT APPLICATION

(11) **EP 3 098 744 A1**
(43) Date of publication of application: **30.11.2016**
(21) Application number: 15305826.8
(22) Date of filing: 29.05.2015
(51) Int. Cl.: G06F 21/57

(54) **A REMOTELY PROTECTED ELECTRONIC DEVICE**

(71) Applicant: Orange, 75015 Paris (FR)
(72) Inventor: AHMAD, Zaheer, UB12UN Southall (GB); DON, Oliver, W139PW London (GB); PORTIER, Jerome, SL13SE Berkshire (GB); SCOTT SKINNER, Charles, TN91UH Kent (GB)
(74) Representative: Cabinet Plasseraud

(57) **Abstract**

An electronic device comprising:
- a storage unit (SU) to store data,
- a secure communication module (SCM) operable to exchange secure messages with a distant server (SERV),
- a control module (CM) operable to boot the secure communication module (SCM) upon activation of the electronic device (DEV).

The secure communication module (SCM) is further configured upon booting to :
- send a boot confirmation request (BCR) to the distant server (SERV) for said electronic device (DEV), and
- control the boot of the electronic device (DEV) as a function of a response (RBCR) received from the distant server (SERV) by said secure communication module in response to the boot confirmation request.

Corresponding system, method of booting an electronic device and computer program.

## Description

The invention relates to electronic devices and in particular to the booting of such devices.

One of the concerns attached to these devices is the safety of the sensitive data these devices often contain, such as private data or business-related data.

Approaches aimed at preventing access to these data in case of theft or loss of such devices have been proposed in the past.

One of these approaches is referred to as a "Push to Disable" approach. As illustrated by US 2013/0318216 A1, an example of implementation of this approach lies in relying on messages sent to the electronic device by an external server. These messages are then used to modify the BIOS configuration of the device, for instance with a view to delete decryption keys contained in the considered electronic device and which are required to access the content of the storage unit included in this device.

Such an approach presents drawbacks. In fact, this approach relies on triggers which are external to the device and therefore require that the state of the device be frequently analyzed, thereby contributing to a rather high complexity of the approach as a whole.

Moreover, this approach relies on frequent manipulation of the BIOS settings of the device. Given the critical nature of these settings for the proper operation of such electronic devices, such an approach is risky and tends to translate into a reduced availability of the devices due to erroneous BIOS settings being selected.

The invention aims at proposing an improved approach which does not exhibit these drawbacks.

To that end, the invention relates to an electronic device comprising:
- a storage unit to store data,
- a secure communication module operable to exchange secure messages with a distant server, and
- a control module operable to boot the secure communication module upon activation of the electronic device,
   said secure communication module being further configured upon booting to :
- send a boot confirmation request to the distant server for said electronic device, and
- control the boot of the electronic device as a function of a response received from the distant server by said secure communication module in response to the boot confirmation request.

As will be made more apparent in the following description, in the context of the present invention, controlling the boot of the electronic device may consist in proceeding with the next steps of the boot sequence until the electronic device is fully booted and operational, or may consist in preventing complete boot of the device thereby rendering the device inoperable.

According to another aspect of the invention, the response received from the distant server comprises a boot authorization or a boot denial.

According to another aspect of the invention, upon activation of the electronic device, said storage unit comprises encrypted data whose decryption is needed to complete the boot of the electronic device, and for the control of the boot of the electronic device, said secure communication module is configured to initiate a decryption of the encrypted data as a function of at least one decryption key contained in said response when said response contains a boot authorization.

According to another aspect of the invention, said secure communication module is configured to command the deletion of said at least one decryption key after decryption of the encrypted data.

According to another aspect of the invention, for the control of the boot of the electronic device, said secure communication module is configured to prevent further booting of the electronic device when said response comprises a boot denial.

According to another aspect of the invention, for the control of the boot of the electronic device, said secure communication module is configured the command the deletion of all or part of the data contained in said storage unit as a function of a deletion instruction contained in said response along with said boot denial.

According to another aspect of the invention, the secure communication module is further configured to send to said distant server an access confirmation request when an attempt to access protected data contained in said storage unit is made by a user of the electronic device during operation of the electronic device, and to grant or deny access to said protected data to the user as a function of a response sent by said distant server in response to the access confirmation request.

According to another aspect of the invention, said secure communication module is configured to send to said distant server an alarm message upon detection of an attempt to tamper with said secure communication module.

According to another aspect of the invention, the secure communication module comprises an embedded Subscriber Identity Module adapted to identify the electronic device and a communication module, said embedded Subscriber Identity Module and said communication module being mounted on said storage unit, and an independent source of electrical energy connected to the embedded Subscriber Identity Module and to the communication module.

The invention further relates to a system comprising:
- an electronic device as defined above, and
- a distant server capable of exchanging secure communications with said electronic device.

According to another aspect of the invention, the distant server comprises a database including, for said electronic device, safety data indicative of whether the electronic device is considered safe or compromised, the distant server being configured to generate the response to a boot confirmation request sent by the electronic device as a function of said safety data.

The invention also relates to a method of booting an electronic device comprising:
- a storage unit to store data,
- a secure communication module operable to exchange secure messages with a distant server, and
- a control module operable to boot the secure communication module upon activation of the electronic device,
said method comprising the steps of:
- upon activation of the electronic device, booting the secure communication module,
- using the secure communication module, sending a boot confirmation request for the electronic device to the distant server, and
- controlling the boot of the electronic device as a function of a response sent to the electronic device by said distant server in response to the boot confirmation request.

According to another aspect of the invention, said response comprises a boot authorization or a boot denial, upon activation of the electronic device, said storage unit comprises encrypted data whose decryption is needed to complete the boot of the electronic device, and controlling the boot of the electronic device comprises initiating a decryption of the encrypted data as a function of at least one decryption key contained in said response when said response contains a boot authorization.

According to another aspect of the invention, said response comprises a boot authorization or a boot denial, and controlling the boot of the electronic device comprises preventing further booting of the electronic device when said response comprises a boot denial.

The invention further relates to a computer program comprising instructions for carrying out the method as defined above when executed by a processor.

Further features and advantages of the invention will become more apparent by reading the following detailed description of the embodiments, which are given by way of non-limiting examples with reference to the appended drawings, in which:
- Figure 1 is an illustration of an electronic device and a system according to the invention; and
- Figure 2 is a flow diagram illustrating the operation of the electronic device of Figure 1.

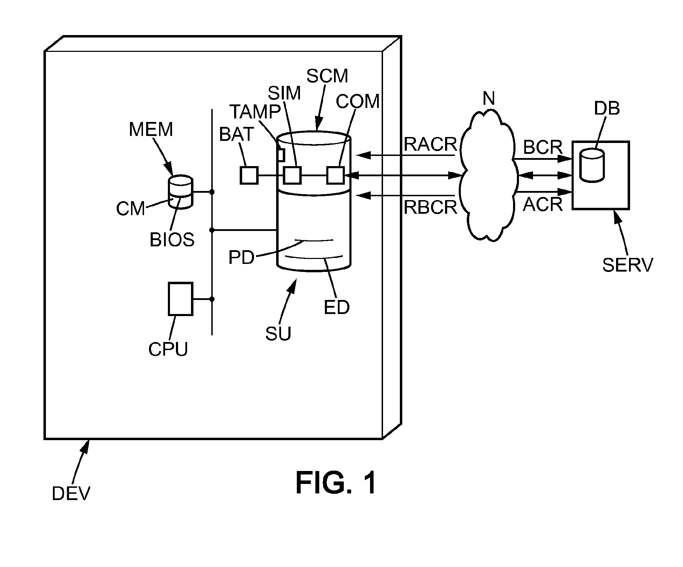

Figure 1 illustrates a distant server SERV in communication with an electronic device DEV according to the invention over a network N. The distant server SERV and the electronic device DEV form a system according to the invention.

The distant server SERV, hereinafter server SERV, is configured to exchange secure messages with the electronic device DEV, hereinafter device DEV. For instance, the messages are exchanged using Short Message Service (SMS) text messages.

In particular, as will be made more apparent hereinafter, the server SERV is configured to :
- receive boot confirmation requests BCR sent by the device DEV;
- receive access confirmation requests ACR sent by the device DEV;
- send a response RBCR to a boot confirmation request BCR to the device DEV; and
- send a response RACR to an access confirmation request ACR to the device DEV.

The purpose and function of these requests and responses is detailed below.

The content of a response to a boot confirmation request BCR or to an access confirmation request ACR is determined as a function of safety data contained in a database DB of the server SERV. The safety data are associated with the device DEV and represent the safety status of the device DEV. The safety data regarding the device DEV may have a value selected among a value indicative of a safe status for the device DEV, which indicates that the safety of the device is not compromised, and one or more values indicative of a compromised status for the device DEV, which indicate that the safety of the device is compromised.

The safety data related to the device DEV may be updated as a function of data sent by the device DEV itself, as detailed herein below. The safety data may also be updated in response to the device being declared lost or stolen by its owner, i.e. declared as having a compromised status. For instance, the safety data is then updated remotely, for instance by an entity such as a Customer Service.

It should be noted that different values of the safety data may be used to flag the device DEV as having a compromised status. These different values may be used to trigger different responses in response to a boot confirmation request BCR or to an access confirmation request ACR, as will be explained in more details below.

The network N may be any network suitable for communications between the device DEV and the server SERV.

The device DEV is a data processing device. For example, the device DEV is a computer small enough to handheld, such as a laptop computer, a smartphone, a digital watch, a head-mounted display, a digital camera, a personal navigation device, and the like.

The following description is given in a non-limiting manner for a configuration in which the device DEV is a cellphone.

The device DEV comprises a processing unit CPU, a storage unit SU for storing data, a BIOS memory MEM and a secure communication module SCM, hereinafter module SCM. In addition, in a known manner, the device DEV comprises additional components such as a display, a display controller, an interface, an interface controller, and so on. Given these components and their operation are not the object of the present invention, these components are not illustrated and will not be discussed any further.

The processing unit CPU is a processor configured to control the operations of the device DEV and of its components by running programs contained in the BIOS memory MEM and in the storage unit SU. In a known manner, to that end, these programs may be loaded in a Random Access Memory (not shown) of the device.

The BIOS memory MEM contains a program known as BIOS (reference BIOS on Figure 1), for Basic Input Output System, whose execution by the processing unit CPU allows the operations of the device DEV to be initiated upon power-up of the device DEV.

As such, the BIOS program BIOS constitutes a control module CM operable to boot the device DEV.

In the context of the invention, this control module CM is configured to boot the module SCM upon activation of the device DEV. More precisely, the control module CM (i.e. the BIOS program BIOS) is configured to hand the control of the booting of the device DEV to the module SCM upon power-up of the device DEV.

To that end, the module SCM is for instance defined in the BIOS settings as the primary medium of the device DEV to be booted upon activation of the device DEV.

The storage unit SU is adapted to store data in a digital form. The storage unit SU is for instance a Hard Disk Drive, or HDD.

As previously indicated, the storage unit SU contains programs, such as an Operating System (OS), whose execution by the processing unit SU allows the device DEV to operate.

The data contained in the storage unit may be encrypted, for instance using at least one encryption key. The decryption of the encrypted data requires at least one decryption key. The encryption and decryption schemes used may be of any known type, such as asymmetric or symmetric. They may also use a single layer of encryption, or a plurality of such layers.

In the context of the invention, upon activation of the device DEV, the storage unit SU comprises encrypted data ED (Figure 1) whose decryption is required for the boot-up sequence of the device to be complete and for the device DEV to operate.

For instance, the encrypted data ED comprise all or part of the data of the Operating System.

Moreover, in the context of the invention, the storage unit SU may comprise protected data PD. The protected data PD may be protected by encryption. However, as opposed to the encrypted data ED, the protected data PD do not need to be decrypted for the device DEV to finish its boot-up sequence and for the device to operate.

These protected data PD include for instance sensitive personal-related or business-related data.

The module SCM is a bootable medium of the device DEV.

The module SCM comprises a Subscriber Identity Module SIM, hereinafter SIM, a communication module COM and a source of electrical energy BAT.

In a known manner, the SIM comprises an integrated circuit including a memory containing identification codes which identify and authenticate the device DEV over a communication network, in particular over the network N.

The communication module COM is configured to exchange messages with the server SERV over the network N.

Advantageously, the SIM and the communication module COM are embedded components mounted on the storage unit SU. In other words, they present themselves in the form of components soldered onto a printed circuit board of the storage unit.

This configuration limits undesired access to these components and therefore reduces the risks of the latter being tampered with.

The source BAT is independent from the source of electrical energy (not shown) used to power the device DEV. As such, the source BAT allows the communication module COM and the SIM to be energized regardless of the state of the device as a whole.

In the context of the invention, the module SCM is configured to send a boot confirmation request BCR to the server SERV upon booting of the module SCM. This boot confirmation request BCR constitutes a query destined to the server SERV so as to determine if the device DEV should be allowed to complete its boot sequence.

The module SCM is further configured to control further booting of the device DEV as a function of the response RBCR sent by the server SERV in response the boot confirmation request BCR.

As indicated above, the precise content of the response RBCR is determined as a function of the safety data related to the device DEV which is stored in the database DB of the server SERV.

The response sent by the server SERV to a boot confirmation request BCR may include information indicative of an authorization to complete the booting of the device DEV, or boot authorization. In such a scenario, the response RBCR also includes the decryption key(s) required to proceed with the decryption of the encrypted data ED.

The control of further booting of the device DEV therefore includes triggering the decryption of the encrypted data ED and triggering the loading of the Operating System of the device DEV.

On the other hand, the response sent by the server SERV to a boot confirmation request BCR may include information indicative of a denial to complete the booting of the device DEV.

The control of further booting of the device DEV therefore includes preventing further booting of the device DEV when the response RBCR contains a boot denial. For instance, to that end, the module SCM triggers a lock-up of the device DEV. The module SCM may additionally trigger the display of a prompt destined to the user and indicating that the boot of the device DEV has been denied. In such a scenario, the response may optionally include a deletion instruction to delete all or part of the content of the storage unit SU.

For instance, the data targeted by these deletion instructions may include the encrypted data ED, both the encrypted data ED and the protected data PD, or the entirety of the content of the storage unit SU.

The module SCM is thus further configured to trigger or carry out the deletion of the data which may be targeted for deletion by the response RBCR to a boot confirmation request BCR (i.e. all or part of the data contained in the storage unit SU such as the encrypted data ED and/or the protected data PD). To that end, the module SCM may contain a dedicated program whose execution by the processing unit CPU causes the corresponding data to be deleted.

The module SCM is further configured to send to the SERV an access confirmation request ACR when an attempt to access the protected data PD by the user of the device DEV is detected during operation of the device DEV. This access confirmation request ACR constitutes a query destined to the server SERV to determine if access to the protected PD should be granted or denied.

This attempt may be in the form of an attempt to open a data folder containing the protected data PD. The detection of such an attempt may be carried out by the module SCM or by another component of the device.

As previously indicated, this request ACR triggers a response RACR from the server SERV. This response may contain information indicative of the fact that the access to the protected data PD should be granted. On the other hand, it may contain information indicative of the fact that the access to the protected data PD should be denied.

The module SCM is thus further configured to grant or prevent access to the protected data PD as a function of the response received by the device DEV from the server SERV in response to the access confirmation request ACR.

Optionally, the response RACR may also include a deletion instruction whose processing by the module SCM triggers the deletion of all or part of the protected data PD. The module SCM is therefore configured to command the deletion of the corresponding protected data PD upon reception of a response RACR which contains such a deletion instruction. For instance, the deletion of the protected data PD is carried out by the module SCM itself using a dedicated program contained in the module SCM.

Advantageously, the module SCM further comprises a tampering detection device TAMP adapted to detect any attempt of tampering with the module SCM.

In these embodiments, the module SCM is further configured to send to the server SERV an alert message upon detection of an attempt to tamper with the module SCM by the tampering detection device TAMP. Such an alert message may be used as a basis for updating the safety data regarding the device DEV which is contained in the database DB of the server, for instance for switching the value of the safety data from a value indicative of a safe status for the device DEV to a value indicative of a compromised status.

Advantageously, the module SCM is further configured to delete the decryption keys needed to decrypt the encrypted data ED. This deletion may be carried out automatically once the decryption is complete, or upon reception of an instruction to that end sent by the server SERV. This functionality may also apply to the decryption keys used to decrypt the protected data PD when the latter are protected by encryption.

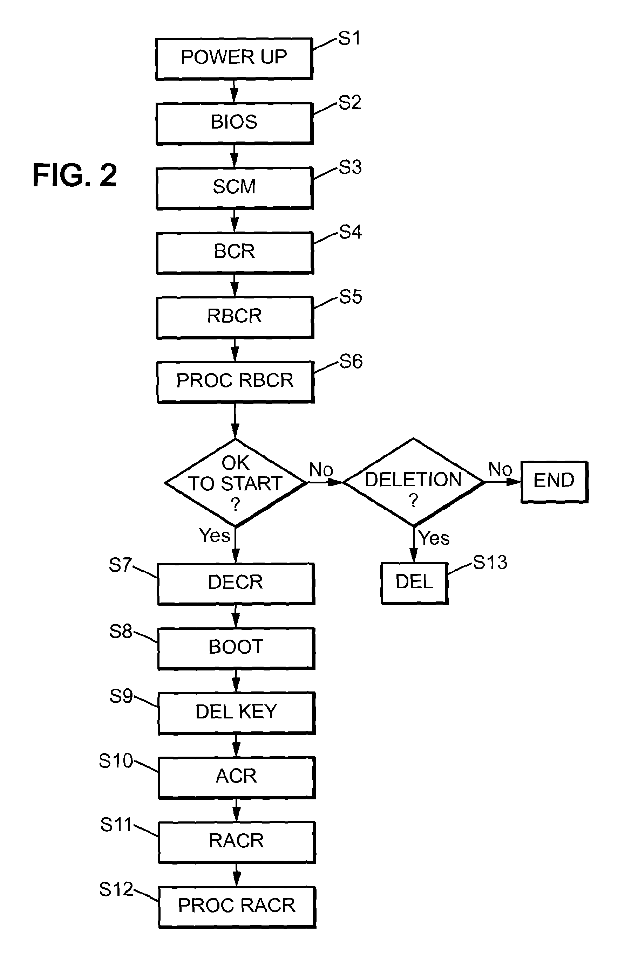

The operating principle of the device DEV according to the invention will now be explained in greater detail in reference to Figures 1 and 2.

During a first step S 1, the device DEV is activated. In other words, it is powered-up, for instance using a power-on button of the device DEV (not shown).

During a second step S2, the processing unit CPU loads the BIOS program BIOS, thereby activating the control module CM.

During a third step S3, the control module CM initiates the boot of the secure communication module SCM, i.e. hands over control to the module SCM for further steps of the booting of the device DEV. From there on, further booting of the device DEV is controlled by the module SCM.

During a fourth step S4, the module SCM generates and sends a boot confirmation request BCR to the server SERV using the communication module COM. The boot confirmation request BCR contains data which identifies the device DEV, such as the identification codes contained in the SIM of the module SCM. The boot confirmation request BCR is then forwarded to the server SERV using the network N, for instance using an SMS text message, and is thereafter received by the server SERV.

During a fifth step S5, the server SERV processes the boot confirmation request BCR received during step S4. To that end, a processing unit (not shown) of the server SERV accesses the content of the database DB and retrieves the safety data associated with the device DEV. Based on the value of the retrieved safety data, which is indicative of whether the device DEV is considered safe or compromised, the server SERV generates a response RBCR to the boot confirmation request BRC which contains information on whether further booting of the device DEV is allowed or denied, as explained above.

When the complete booting of the device DEV is determined as being allowed in view of the retrieved safety data, the server SERV generates the response RBCR so that the latter includes the decryption key(s) required for decryption of the encrypted data ED contained in the storage unit SU of the device.

When the complete booting of the device DEV is determined as undesired in view of the retrieved safety data, the server SERV generates the response RBCR accordingly, the latter thus comprising a boot denial.

Optionally, the response RBCR may contain a deletion instruction indicative of the fact that all or part of the data contained in the storage unit SU should be deleted. Whether this deletion instruction is contained in the response RBCR or not may be determined as a function of the value of the safety data among all the possible values which are indicative of a compromised safety status for the device.

As an example, the value 0 may be associated with a safe status of the device DEV. The values 1, 2, 3 and 4 may all be associated with a compromised status for the device DEV, and all translate into a negative response RBCR when a boot confirmation request BCR is sent by the module SCM of the device DEV. The response RBCR generated in response to the value of safety data being 1 does not include any deletion instruction. The value 2 gives rise to a response RBCR which contains a deletion instruction which triggers deletion of the protected data PD upon reception by the module SCM, and the value 3 gives rise to a response RBCR which contains a deletion instruction which triggers deletion of both the protected data PD and the encrypted data ED. As for the value 4, it gives rise to a response RBCR which contains a deletion instruction to trigger the deletion of the entire content of the storage unit SU, for instance in the form of a disk formatting of the storage unit SU.

Once it has been generated by the server SERV, the response RBCR is transferred to the device DEV over the network N, for instance using a SMS text message, and is thereafter received by the device DEV.

During a sixth step S6, the response RBCR is processed by the module SCM.

The result of this processing depends on the content of the response RBCR.

When the response RBCR contains a boot authorization, the module SCM retrieves the decryption key(s) contained in the response RBCR and triggers the decryption of the encrypted data ED during a decryption step S7.

After the decryption step S7, the complete booting of the device DEV is then carried out using the newly decrypted data during a step S8.

To that end, for instance, the module SCM executes a boot process which corresponds to the boot process that is commonly executed by the BIOS of devices which do not contain a module SCM. For instance, the module SCM then triggers the loading of the Operating System.

After the booting of the device is complete and the decryption key(s) is no longer needed, the module SCM proceeds to delete the encryption key(s) during a step S9. Alternatively, this deletion is triggered by a message sent to that end by the server SERV. It should be noted that this step S9 may occur at a different stage of the process illustrated by Figure 2, in particular at a later stage, especially when the deletion is triggered by a message sent to that end by the server SERV.

Once the boot-up sequence is complete and the device DEV is operational, when an attempt to access the protected data PD is detected, the module SCM generates an access confirmation request ACR at step S10. This request ACR is sent to the server SERV over the network N. This request is for instance sent using a SMS text message.

During a step S11, the request ACR is processed by the server SERV. The server SERV retrieves the safety data regarding the device DEV and generates a response RACR to the access confirmation request ACR. The response RACR contains an access authorization if the safety data related to the device DEV is indicative of a safe status for the device DEV. Alternatively, the response RACR contains an access denial if the safety data is indicative of a compromised status of the device DEV.

In some embodiments, the response RACR may contain, in addition to the access denial, information which indicates that all or part of the protected data PD should be deleted. Moreover, when the protected data PD is protected by encryption and the safety data is indicative of a safe status for the device DEV, the RACR contains the decryption key(s) required to decrypt the protected data PD whose access will be granted.

The response RACR is sent to the device DEV over the network N.

During a step S12, the module SCM processes the response RACR. The module SCM triggers the access to the protected data PD when the response RACR contains an access authorization. If needed, the protected data PD are then decrypted using the decryption key(s) contained in the response RACR.

Alternatively, the module SCM inhibits the access to the protected data PD when the response RACR contains an access denial. If the response RACR further comprises information indicative that the protected data PD should be deleted, the module SCM proceeds to delete the protected data PD.

Going back to step S6, when the response RBCR to the boot confirmation request BCR contains a boot denial, the module SCM prevents the device DEV from booting any further.

If the response RBCR further contains information regarding the deletion of data contained in the storage unit SU, the module SCM proceeds to delete the corresponding data during a step S13(the encrypted data ED, the protected data PD, or the whole content of the storage unit SU).

It should be noted that in case the complete boot of the device has been authorized and the device DEV has become operational, the data which have been decrypted to complete the boot-up of the device are encrypted again prior to the device being shut down.

Preferably, this re-encryption is carried out as soon as possible so as to prevent leaving the device DEV in an unsecure state should it shut down improperly. For instance, the re-encryption of the encrypted data ED is carried out on boot completion, or as soon as the encrypted data ED (in their decrypted form) are no longer necessary to finish the boot sequence of the device DEV.

The electronic device according to the invention presents several advantages.

In fact, the determination of whether the electronic device should be made operational is carried out systematically upon activation of the device. As a consequence, the lock-up of the device is obtained in a manner which does not require an operator to be involved.

Moreover, the general approach of the invention, which may be qualified as a "Pull to Enable" approach, translates into a simplified overall process of checking if the device should be made operational as there is no need to evaluate the state of the device during the process itself.

In addition, the fact that the Embedded SIM and the communication module COM are mounted on the storage unit and are made difficult to access physically increases the reliability of the device and of the approach proposed by the invention. The risk of having the device made operational when it should not be is further reduced when the module SCM has a built-in tampering detection device.

Moreover, the principle of checking whether access to the protected data PD during operation of the device DEV should be granted further enhances the overall security of the data contained in the electronic device.

Furthermore, the deletion of the decryption keys that have been sent by the server SERV once the encrypted data have been decrypted further increases the overall security of the data contained in the device, as the likelihood of the keys being obtained by a third party is reduced.

Additionally, the presence of the module SCM is transparent for the Operating System of the device DEV and does not require that extensive changes be made to the Operating System or to the device as a whole. This proves handy for retrofitting existing devices with a module SCM so as to obtain a device according to the invention.

The description has been given in a scenario in which only one server SERV is involved in the operating process of the device. However, the server SERV is to be understood as a server entity which may include a plurality of servers involved in the above process.

In some embodiments, the module SCM is further configured to carry out a back-up of some or all of the data contained in the storage unit SU regardless of the network connectivity status of the device DEV.

For instance, the data to be backed-up are sent via the network N to a remote location using the communication module COM. The remote location may include the server SERV, but is not limited thereto. For instance, the data may be sent to any remote computer accessible via the network N.

The transfer of data may be initiated in response to a request sent to that end by the server SERV. It may also be triggered by an action of the user using the interface of the device DEV. The handling of this functionality may be carried out by the module SCM itself. Alternatively, it may be managed by the processing unit CPU upon triggering by the module SCM.

In some embodiments, the battery BAT is also adapted to energize the storage unit SU. As such, the storage unit SU can be energized regardless of the general state of the device DEV.

As a consequence, the deletion of data contained in the storage unit SU or the backing-up of these data can be carried out for any configuration of the device DEV. In particular, these actions can be performed while the device DEV is shutdown.

## Claims

1. An electronic device comprising:
- a storage unit (SU) to store data,
- a secure communication module (SCM) operable to exchange secure messages with a distant server (SERV), and
- a control module (CM) operable to boot the secure communication module (SCM) upon activation of the electronic device (DEV),
said secure communication module (SCM) being further configured upon booting to :
- send a boot confirmation request (BCR) to the distant server (SERV) for said electronic device (DEV), and
- control the boot of the electronic device (DEV) as a function of a response (RBCR) received from the distant server (SERV) by said secure communication module in response to the boot confirmation request.

2. The electronic device according to claim 1, wherein said response (RBCR) received from the distant server (SERV) comprises a boot authorization or a boot denial.

3. The electronic device according to claim 2, wherein upon activation of the electronic device, said storage unit (SU) comprises encrypted data (ED) whose decryption is needed to complete the boot of the electronic device (DEV), and wherein for the control of the boot of the electronic device (DEV), said secure communication module (SCM) is configured to initiate a decryption of the encrypted data (ED) as a function of at least one decryption key contained in said response when said response contains a boot authorization.

4. The electronic device according to claim 3, wherein said secure communication module (SCM) is configured to command the deletion of said at least one decryption key after decryption of the encrypted data (ED).

5. The electronic device according to any one of claims 2 to 4, wherein for the control of the boot of the electronic device (DEV), said secure communication module (SCM) is configured to prevent further booting of the electronic device (DEV) when said response comprises a boot denial.

6. The electronic device according to any one of claims 2 to 5, wherein for the control of the boot of the electronic device (DEV), said secure communication module (SCM) is configured the command the deletion of all or part of the data contained in said storage unit (SU) as a function of a deletion instruction contained in said response (RBCR) along with said boot denial.

7. The electronic device according to any of the preceding claims, wherein the secure communication module (SCM) is configured to send to said distant server an access confirmation request (ACR) when an attempt to access protected data (PD) contained in said storage unit is made by a user of the electronic device during operation of the electronic device (DEV), and to grant or deny access to said protected data (PD) to the user as a function of a response (RACR) sent by said distant server (SERV) in response to the access confirmation request (ACR).

8. The electronic device according to any one of claims 1 to 7, wherein said secure communication module (SCM) is further configured to send to said distant server an alarm message upon detection of an attempt to tamper with said secure communication module (SCM).

9. The electronic device according to any one of claims 1 to 8, wherein the secure communication module (SCM) comprises an embedded Subscriber Identity Module (SIM) adapted to identify the electronic device and a communication module (COM), said embedded Subscriber Identity Module (SIM) and said communication module being mounted on said storage unit (SU), and an independent source of electrical energy (BAT) connected to the embedded Subscriber Identity Module (SIM) and to the communication module (COM).

10. A system comprising:
- an electronic device (DEV) according to any one of claims 1 to 9, and
- a distant server (SERV) capable of exchanging secure communications with said electronic device (DEV).

11. The system according to claim 10, wherein the distant server (SERV) comprises a database (DB) including, for said electronic device, safety data indicative of whether the electronic device (DEV) is considered safe or compromised, the distant server (SERV) being configured to generate the response (RBCR) to a boot confirmation request (BCR) sent by the electronic device (DEV) as a function of said safety data.

12. A method of booting an electronic device comprising:
- a storage unit (SU) to store data,
- a secure communication module (SCM) operable to exchange secure messages with a distant server (SERV), and
- a control module (CM) operable to boot the secure communication module (SCM) upon activation of the electronic device (DEV),
said method comprising the steps of:
- upon activation of the electronic device (DEV), booting the secure communication module (SCM),
- using the secure communication module (SCM), sending a boot confirmation request (BCR) for the electronic device to the distant server (SERV), and
- controlling the boot of the electronic device (DEV) as a function of a response (RBCR) sent to the electronic device (DEV) by said distant server in response to the boot confirmation request (BCR).

13. The method according to claim 12, wherein said response (RBCR) comprises a boot authorization or a boot denial, wherein upon activation of the electronic device, said storage unit (SU) comprises encrypted data (ED) whose decryption is needed to complete the boot of the electronic device (DEV), and wherein controlling the boot of the electronic device (DEV) comprises initiating a decryption of the encrypted data (ED) as a function of at least one decryption key contained in said response when said response contains a boot authorization.

14. The method according to claim 12, wherein said response comprises a boot authorization or a boot denial, and wherein controlling the boot of the electronic device (DEV) comprises preventing further booting of the electronic device (DEV) when said response comprises a boot denial.

15. A computer program comprising instructions for carrying out the method according to any one of claims 12 to 14 when executed by a processor.
